# NEW EUROPEAN PATENT SPECIFICATION

(11) **EP 2 301 763 B2**
(45) Date of publication and mention of the opposition decision: **26.01.2022**
(45) Mention of the grant of the patent: 13.11.2013
(21) Application number: 10180635.4
(22) Date of filing: 28.09.2010
(51) Int. Cl.: B44C 5/06, A41G 1/00, B29C 47/88, B29C 47/00

(54) **Method for producing imitation branches**
Verfahren zur Herstellung von Imitationszweigen
Procédé de production de branches d'imitation

(30) Priority: 29.09.2009 BE 200900597
(43) Date of publication of application: 30.03.2011
(60) Divisional application: 13182673.7
(73) Proprietor: Solidor bvba, 8930 Lauwe (BE)
(72) Inventor: Dejans, Emmanuel, 8930 Lauwe (BE); Dejans, Olivier, 8930 Lauwe (BE)
(74) Representative: Ostyn, Frans

(56) References cited:
- DE-A1- 2 005 174
- DE-A1- 2 818 057
- DE-C1- 4 030 274
- FR-A- 2 738 768
- NL-C- 1 032 935
- US-A- 3 259 163
- US-A- 3 280 847
- US-A- 3 664 790
- US-A- 5 562 956
- US-A- 5 565 159
- Dupont Surlyn Extrusion Guide Dec. 2003

## Description

The present invention, on the one hand, relates to a method for producing imitation branches, in which a polymer mass is melted under pressure, is then forced through an extruder head and is drawn from said extruder head in the form of an elongate plastic strand, which is subsequently cooled and is shortened to the desired length.

The present invention relates in particular to a method for producing imitation branches, also referred to as fake branches, suitable for making eg. separating walls, decorative walls, furniture and decorative material.

Making separating walls or other embodiments by using natural branches (e.g. hazel) or another natural material is known per se. Thus, the Dutch patent publication NL 1032935 describes a wall structure filled with whole coconut husks or parts thereof, in which these are clamped on and enclosed between two layers of mesh in such a manner that the coconut husks remain clamped between the latter.

The use of natural materials, in particular natural branches, when producing separating walls, furniture and/or decorative material, has the drawback that these die over the course of time (approximately 5 years), which is unaesthetic and makes it possible to look through the product made from natural branches.

It is an object of the present invention to provide a solution to the abovementioned problem.

The US patent publication US-A-5 565 159 describes a method of manufacturing an etched extrusion, the method comprising the steps of extruding a thermoplastic material to produce a hot extrusion, and contacting the extrusion, while the extrusion is still hot, with a mixture of at least two fluids having different thermal conductivities so that the extrusion develops an uneven outer surface due to different rates of shrinkage caused by the different thermal conductivities.

The US patent publication US-A-3 664 790 describes a method for providing more distinctive, predetermined and decorative patterns on extruded articles. This is accomplished by applying an additional material in the die, on the plastic strand or by subjecting the plastic strand to an additional treatment, just after it has left the die and before it is cooled, for example: a rotary movement or temporarily stopping the advancement of the plastic strand. By means of the method described in US-A-3 664 790, it is possible to predetermine exactly in which location the distinctive and decorative patterns will be produced on the end product.

The object of the invention is achieved by providing a method for producing imitation branches, in which a polymer mass is melted under pressure, is then forced through an extruder head and is drawn from this extruder head in the form of an elongate plastic strand, which is subsequently cooled and is shortened to the desired length, in which the plastic strand is at least partly drawn through a moving cooling medium during cooling, in which the plastic strand is completely submerged in said cooling medium for at least part of its path through the cooling medium, and in which during cooling, air and/or nitrogen bubbles are introduced into the cooling medium which is provided in a cooling bath, by aerating the cooling bath continuously by means of an aerating system or by projecting liquid (water) droplets onto the surface of the cooling medium by using one or more liquid-projecting device(s) so that air and/or nitrogen bubbles are provided on at least a part of the outer surface of the plastic strand, which bubbles at irregular locations insulate the surface of the plastic strand from the cooling medium, as a result of which the outer surface of the plastic strand is at least partly provided with irregular modifications to the surface structure. As a result of using a moving cooling medium, an irregular and turbulent way of cooling is created so that a plastic strand having an outer surface with an irregular shape is produced. The modifications to the surface structure occur during cooling, so that the plastic strand is thus provided with an irregular pattern, the result of which on the end product cannot be predetermined.

Completely submerging the plastic strand in the cooling medium has the advantage that the plastic strand is provided with the indentations across its entire periphery. Preferably, the plastic strand is submerged shortly after it has left the extruder head.

In the context of the present invention, modifications to the surface structure are intended to mean: uneven structures, indentations, local thickenings, swirls, line patterns, which are provided in an irregular and arbitrary way. Those applying the method cannot possibly determine beforehand at which location the modifications will occur in the surface structure of the end product.

Compared to natural branches, imitation branches made from plastic have the advantage that they have a much longer service life (at least 15 years), they are perfectly recyclable and they do not die. In addition, they are UV-resistant.

By means of the method according to the invention, it is perfectly possible to produce an imitation branch which can hardly be distinguished from a natural branch. The manufactured imitation branch is preferably hollow or solid.

In a preferred method according to the present invention, the cooling medium is water and air and/or nitrogen bubbles are provided on at least part of the outer surface of the plastic strand during cooling. The presence of such bubbles ensures that the surface of the plastic strand is insulated from the cooling medium at irregular positions, as a result of which the cooling process is completely different in those positions from the positions where there are no air and/or nitrogen bubbles. At the location of the areas where air and/or nitrogen bubbles have been present during the cooling process, circular and/or oval indentations, also referred to as knots, are formed in the surface of the plastic strand. Such indentations enhance the natural appearance.

With a particular method according to the present invention, at the extruder head outlet, the speed at which the polymer mass is forced through the extruder head differs on the various sides of the extruder head outlet with respect to one another. Due to the lower flow velocity of the polymer mass, the plastic strand will have a ribbed surface at that location.

With a more particular method according to the present invention, the manufactured imitation branch is subjected to an after-treatment. Preferably, one or more of the following after-treatments are chosen: sanding, brushing, sandblasting, drawing through a teflon-coated heatable die and/or hot-air blowing.

According to a preferred method according to the present invention, the polymer mass comprises a thermoplastic material. In particular, the polymer mass comprises a foamable plastic, such as for example HDPE, PE, or another known foamable plastic.

Another part of the present description relates to an imitation branch, comprising a plastic strand, in which said plastic strand is locally provided with irregular and arbitrary modifications to the surface structure. Said plastic strand preferably has a diameter which is variable in the longitudinal direction.

The imitation branch is produced according to the method as described above.

The present description furthermore relates to a wall panel comprising a number of imitation branches, the use of such imitation branches in the production of wall panels, flower boxes, furniture or similar embodiments and to a wall structure, comprising such a wall panel, in which said wall structure comprises a metal or wooden frame, between which or on which the wall panel is fitted.

In order to further explain the features of the present invention and to indicate additional advantages and particulars thereof, a more detailed description of the method according to the invention is given below. It will be clear that nothing in the following description can be interpreted as a limitation of the scope of protection sought in the claims.

In this description, reference numerals are used to refer to the attached drawings, in which:
- *Fig. 1**: shows a representation of a number of imitation branches (**Figs. 1a, 1b, 1c and 1d**);*
- *Fig. 2**: shows a diagrammatic representation of a number of possible production processes (**Figs. 2a and 2b**) for producing imitation branches.*

The present invention relates essentially to a method for producing imitation branches (1) from foamed plastic material. Such manufactured imitation branches (1) are perfectly suitable for making eg. separating walls, decorative walls, furniture, decorative material and flower pot. The branches (1) produced are very flexible and can consequently also be woven.

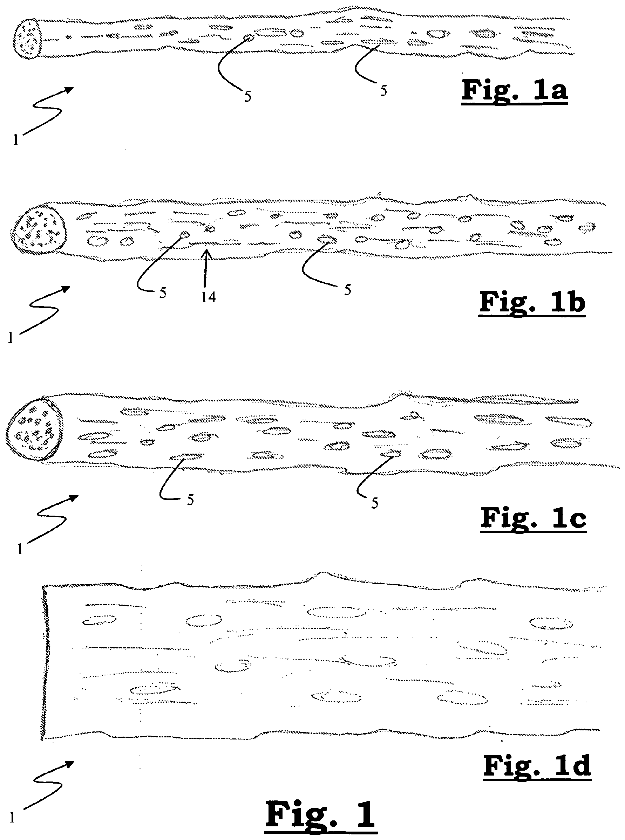

Compared to natural branches, imitation branches (1) have the significant advantage that they have a much longer service life. In addition, they can be recycled and their quality hardly deteriorates. Normally, the imitation branches (1) have a diameter which is between 10 and 26 mm, preferably between 12 and 24 mm. Fig. 1 shows a number of possible embodiments of imitation branches (1), with Fig. 1a being an illustration of an imitation branch (1) with a diameter of essentially 14 mm, Fig. 1b showing an imitation branch (1) with a diameter of 18 mm and Fig. 1c showing an imitation branch (1) with a diameter of 22 mm. The diameter is essentially determined by the extrusion opening, the foaming velocity and the speed of the drawing device. Instead of imitation branches (1) having a round cross section, it is also possible to produce plate-shaped imitation branches (1) using the method according to the invention, for example by modifying the shape of the extrusion opening. Fig. 1d illustrates such a flat imitation branch (1) which has a width of approximately 40 mm.

With imitation branches (1) made of plastic, it is important that their external appearance hardly differs from branches made of natural material. This effect is achieved by producing the branches (1) in accordance with the method according to the invention. According to the present invention, a polymer mass is melted under pressure in an extrusion device (7), is then forced through an extruder head (2) and drawn from said extruder head (2) by means of a drawing device (8) in the form of an elongate plastic strand (3), which is then cooled and cut to the desired length. The specific appearance which imitates that of a natural branch virtually perfectly is achieved by at least partly drawing the plastic strand (3), during the cooling process thereof, through a moving cooling medium (4). As a result of the 'turbulent' cooling, the plastic strand (3) is at least partly provided with irregular (arbitrary) modifications to the surface structure on its outer surface. Once the modifications have been made to the surface structure, the plastic strand (3) can be dried, for example by running it past a drying device (9).

The polymer mass used mainly comprises a thermoplastic material, such as for example PE or HDPE. However, other known plastics are also used, preferably foamable plastic material.

Various additives can also be added to the polymer mass, such as for example UV-stabilizers, flame retardants and pigments.

Since a branch is being imitated, the outlet of the extruder head (2) is circular or oval. By modifying the internal shape of the die, it is possible, if desired, to produce additional surface effects on the plastic strand (3). However, it is evident that apart from circular or oval branches, other shapes, for example plate-like shapes, of imitation branches are also produced.

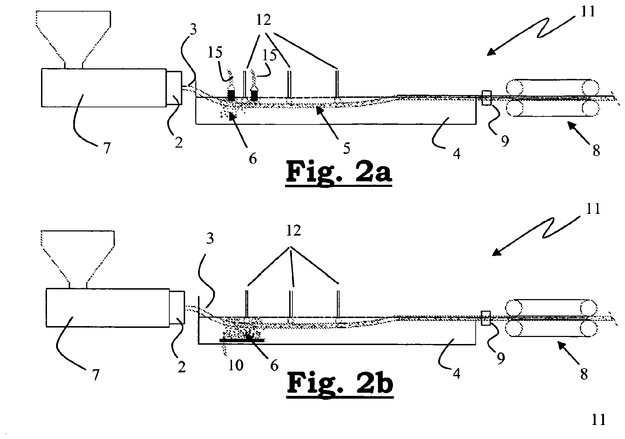

In many cases, water is used as the cooling medium (4). During the cooling process as illustrated in Figs. 2a and 2b, air and/or nitrogen bubbles (6) are provided on at least part of the plastic strand (3). The presence of such bubbles (6) ensures that the surface of the plastic strand (3) is isolated from the cooling medium (4) at irregular positions, as a result of which the cooling process is completely different in those specific positions from the positions where no air and/or nitrogen bubbles (6) are present. In those positions where air and/or nitrogen bubbles (6) were present during the cooling process, circular indentations, oval indentations, indentations with a blown centre and/or bubbles are formed in the surface of the plastic strand (3). Such indentations enhance the natural appearance and can be compared to the so-called knots or shoots which are present in natural branches.

Tests have shown that the depth of the indentation, indentation with blown centre, bubble depends on the size of the air bubble; large air bubbles result in deeper indentations than smaller ones.

The air and/or nitrogen bubbles (6) can be introduced into the cooling medium (4) in various ways. A possibility is to aerate the cooling bath continuously by means of an aerating system (10) (see Fig. 2b). Air bubbles can also (see Fig. 2a) be formed by projecting liquid (water) droplets onto the surface of the cooling medium (4) by using one or more liquid-projecting device(s) (15).

As can be seen in Fig. 2a and 2b, the plastic strand (3) is completely submerged in the cooling medium (4) for at least part of its path through this cooling medium (4). This has the advantage that the plastic strand (3) can be provided with the indentations across its entire periphery. Preferably, the plastic strand (3) is submerged shortly after leaving the extruder head (2).

Since the plastic strand (3) has a specific weight which is less than 1 and therefore floats on the water surface, the device (11) for producing imitation branches (1) comprises means which keep the plastic strand (3) submerged for at least part of its path. The present device is denoted by reference numeral 12 in Figs. 2a and 2b.

When the plastic strand (3) is not submerged, it floats on the liquid surface of the cooling medium (4). In this case, the part of the plastic strand (3) which comes into contact with the cooling medium (4), for example water, will exhibit a line pattern/structure (14).

However, the modifications (5) to the surface structure can also be produced in other ways. Thus, the plastic strand (3) can be guided over a conveyor belt (13) after it has left the extruder head (2) in which case the plastic strand (3) is cooled by the air (cooling medium). The surface structure is modified by projecting a liquid, preferably water droplets, onto the plastic strand (3) via the liquid-projecting device (15). The water droplets will produce uneven structures on the outer surface.

In order to make additional modifications to the surface structure of the plastic strands (3), it is for example also possible to vary the flow rate of the polymer mass, or to carry out extrusion at temperatures which are lower than those which are normally used.

Once the plastic strands (3) have cooled down, they leave the device (11) via the drawing device (8) and are cut to the desired length and packaged. The cut length depends on the kind of packaging: if the plastic strands (3) are rolled up, they are cut to lengths of 100 to 150 metres and if they are packaged individually, they are cut to lengths of 1 to 5 metres.

Before or after the manufactured imitation branch (1) is packaged (for weaving or fitting, as desired) it can be subjected to an after-treatment (not illustrated in the attached figures). Preferably, one or more of the following after-treatments are chosen: sanding, brushing, sandblasting, drawing through a teflon-coated heatable die and/or hot-air blowing. During after-treatment, various different kinds of means can be used, such as for example: sanding paper of different grain size, steel brushes, copper brushes, and sandblasting using various granules, such as: metal granules, glass granules, and various sand grains (coarse, large).

The manufactured imitation branches (1) are ideally suited to be used in the production of various embodiments, such as for example: separating walls, noise barriers, decorative walls, furniture and decorative material. Thus, when manufacturing, for example, separating walls (wall structure), a number of such imitation branches will be fitted (possibly woven) between or on a wooden or metal frame structure.

## Claims

1. Method for producing imitation branches (1), in which a polymer mass is melted under pressure, is then forced through an extruder head (2) and is drawn from said extruder head (2) in the form of an elongate plastic strand (3), which is subsequently cooled and is shortened to the desired length, **characterized in that** the plastic strand (3) is at least partly drawn through a moving cooling medium (4) during cooling, in which the plastic strand (3) is completely submerged in said cooling medium (4) for at least part of its path through the cooling medium (4), and in which during cooling, air and/or nitrogen bubbles are introduced into the cooling medium (4) which is provided in a cooling bath, by aerating the cooling bath continuously by means of an aerating system (10) or by projecting liquid (water) droplets onto the surface of the cooling medium (4) by using one or more liquid-projecting device(s) (15) so that air and/or nitrogen bubbles are provided on at least a part of the outer surface of the plastic strand (3), which bubbles at irregular locations insulate the surface of the plastic strand (3) from the cooling medium (4), by which the plastic strand (3) on its outer surface is at least partially provided with irregular modifications (5) to the surface structure.

2. Method for producing imitation branches (1) according to Claim 1, **characterized in that** the cooling medium (4) is water.

3. Method for producing imitation branches (1) according to one of the preceding claims, **characterized in that,** at the extruder head outlet, the speed at which the polymer mass is forced through the extruder head (2) differs on the various sides of the extruder head outlet with respect to one another.

4. Method for producing imitation branches (1) according to one of the preceding claims, **characterized in that** the manufactured imitation branch (1) is subjected to an after-treatment.

5. Method for producing imitation branches (1) according to Claim 4, **characterized in that** one or more of the following after-treatments are chosen: sanding, brushing, sandblasting, drawing through a teflon-coated heatable die and/or hot-air blowing.

6. Method for producing imitation branches (1) according to one of the preceding claims, **characterized in that** the polymer mass comprises a thermoplastic material.

7. Method for producing imitation branches (1) according to one of the preceding claims, **characterized in that** the polymer mass comprises a foamable plastic.

## Patentansprüche

1. Verfahren zum Herstellen von Zweigimitaten (1), wobei eine Polymermasse unter Druck geschmolzen wird, dann durch einen Extruderdüsenkopf (2) gepresst wird und aus dem Extruderdüsenkopf (2) in Form eines lang gestreckten Kunststoffstrangs (3) gezogen wird, der anschließend gekühlt und auf die gewünschte Länge geschnitten wird, **dadurch gekennzeichnet, dass** der Kunststoffstrang (3) zumindest teilweise durch ein sich bewegendes Kühlmedium (4) während des Kühlens gezogen wird, in welches der Kunststoffstrang (3) im Kühlmedium (4) zumindest über einen Teil seines Weges durch das Kühlmedium (4) vollständig eingetaucht ist und bei dem während des Kühlens Luft- und/oder Stickstoffblasen in das in einem Kühlbad bereitgestellte Kühlmedium (4) eingetragen werden, indem das Kühlbad kontinuierlich mit Hilfe eines Belüftungssystems (10) belüftet wird oder indem Flüssigkeitströpfchen (Wassertröpfchen) durch Verwendung einer oder mehrerer Flüssigkeitsschleudervorrichtungen (15) auf die Oberfläche des Kühlmediums (4) geschleudert werden, so dass Luft- und/oder Stickstoffblasen zumindest auf einem Teil der Außenfläche des Kunststoffstrangs (3) vorgesehen sind, wobei die Blasen an unregelmäßigen Orten die Oberfläche des Kunststoffstrangs (3) gegenüber dem Kühlmedium (4) isolieren, wodurch der Kunststoffstrang (3) auf seiner Außenfläche zumindest teilweise mit unregelmäßigen Veränderungen (5) an der Oberflächenstruktur versehen ist.

2. Verfahren zum Herstellen von Zweigimitaten (1) nach Anspruch 1, **dadurch gekennzeichnet, dass** das Kühlmedium (4) Wasser ist.

3. Verfahren zum Herstellen von Zweigimitaten (1) nach einem der vorherigen Ansprüche, **dadurch gekennzeichnet, dass** am Auslass des Extruderdüsenkopfes die Geschwindigkeit, mit der die Polymermasse durch den Extruderdüsenkopf (2) gepresst wird, sich an den verschiedenen Seiten des Extruderdüsenkopfauslasses voneinander unterscheidet.

4. Verfahren zum Herstellen von Zweigimitaten (1) nach einem der vorherigen Ansprüche, **dadurch gekennzeichnet, dass** das hergestellte Zweigimitat (1) einer Nachbehandlung unterzogen wird.

5. Verfahren zum Herstellen von Zweigimitaten (1) nach Anspruch 4, **dadurch gekennzeichnet, dass** eine oder mehrere der folgenden Nachbehandlungen gewählt werden: Schmirgeln, Bürsten, Sandstrahlen, Ziehen durch eine teflonbeschichtete erwärmbare Düse und/oder Heißluftbehandlung.

6. Verfahren zum Herstellen von Zweigimitaten (1) nach einem der vorherigen Ansprüche, **dadurch gekennzeichnet, dass** die Polymermasse ein thermoplastisches Material umfasst.

7. Verfahren zum Herstellen von Zweigimitaten (1) nach einem der vorherigen Ansprüche, **dadurch gekennzeichnet, dass** die Polymermasse einen schäumbaren Kunststoff umfasst.

## Revendications

1. Procédé de production de simili-branches (1), dans lequel une masse polymère est fondue sous pression, est ensuite refoulée à travers une tête d'extrudeuse (2) et est tirée de ladite tête d'extrudeuse (2) sous la forme d'une tige de plastique allongée (3) qui est ensuite refroidie et raccourcie à la longueur souhaitée, **caractérisé en ce que** la tige de plastique (3) est au moins en partie tirée à travers un milieu de refroidissement mobile (4) au cours du refroidissement, dans lequel la tige de plastique (3) est complètement immergée dans ledit milieu de refroidissement (4) sur au moins une partie de son trajet à travers le milieu de refroidissement (4), et dans lequel, au cours du refroidissement, des bulles d'air et/ou d'azote sont introduites dans le milieu de refroidissement (4) qui est placé dans un bain de refroidissement, en aérant le bain de refroidissement de manière continue au moyen d'un système d'aération (10) ou en projetant des gouttelettes de liquide (eau) sur la surface du milieu de refroidissement (4) en utilisant un ou plusieurs dispositifs de projection de liquide (15) de sorte que des bulles d'air et/ou d'azote soient fournies sur au moins une partie de la surface externe de la tige de plastique (3), lesdites bulles isolant à des emplacements irréguliers la surface de la tige de plastique (3) du milieu de refroidissement (4), si bien que la tige de plastique (3) présentera, sur sa surface externe, au moins en partie des modifications irrégulières (5) de la structure de surface.

2. Procédé de production de simili-branches (1) selon la revendication 1, **caractérisé en ce que** le milieu de refroidissement (4) est de l'eau.

3. Procédé de production de simili-branches (1) selon l'une quelconque des revendications précédentes, **caractérisé en ce que,** au niveau de la sortie de la tête d'extrudeuse, la vitesse à laquelle la masse polymère est refoulée à travers la tête d'extrudeuse (2) diffère sur les divers côtés de la sortie de la tête d'extrudeuse.

4. Procédé de production de simili-branches (1) selon l'une quelconque des revendications précédentes, **caractérisé en ce que** la simili-branche fabriquée (1) est soumise à un post-traitement.

5. Procédé de production de simili-branches (1) selon la revendication 4, **caractérisé en ce que** l'on choisit un ou plusieurs des post-traitements suivants : sablage, brossage, décapage au jet de sable, étirage à travers une filière chauffable revêtue de Teflon et/ou soufflage à l'air chaud.

6. Procédé de production de simili-branches (1) selon l'une des revendications précédentes, **caractérisé en ce que** la masse polymère comprend un matériau thermoplastique.

7. Procédé de production de simili-branches (1) selon l'une quelconque des revendications précédentes, **caractérisé en ce que** la masse polymère comprend une matière plastique expansible.
